# EUROPÄISCHE PATENTSCHRIFT

(11) **EP 2 563 570 B1**
(45) Veröffentlichungstag und Bekanntmachung des Hinweises auf die Patenterteilung: **21.01.2015**
(21) Anmeldenummer: 11716902.9
(22) Anmeldetag: 27.04.2011
(51) Int. Cl.: B29C 70/08, B32B 27/06, B29C 70/46, B29K 711/14, B29K 311/10, B29L 31/30

(54) **INTERIEURBAUTEIL MIT KÜNSTLICHER OBERFLÄCHENGESTALTUNG UND VERFAHREN ZU DESSEN HERSTELLUNG**
INTERIOR COMPONENT HAVING AN ARTIFICIALLY DESIGNED SURFACE AND METHOD FOR PRODUCING THE SAME
ÉLÉMENT INTÉRIEUR À STRUCTURE SUPERFICIELLE ARTIFICIELLE ET PROCÉDÉ POUR LE PRODUIRE

(30) Priorität: 27.04.2010 DE 102010028247
(43) Veröffentlichungstag der Anmeldung: 06.03.2013
(73) Patentinhaber: Lisa Dräxlmaier GmbH, 84137 Vilsbiburg (DE)
(72) Erfinder: SCHLEMMER, Christian, 84034 Landshut (DE); FAGNER, Andrea, 84155 Bodenkirchen (DE); JÜNGER, Astrid, 83071 Stephanskirchen (DE)
(86) Internationale Anmeldenummer: PCT/EP2011/056629
(87) Internationale Veröffentlichungsnummer: WO 2011/134983

(56) Entgegenhaltungen:
- DE-A1- 4 141 955
- DE-A1- 10 113 273
- DE-A1- 10 136 125
- DE-A1- 10 212 961
- DE-A1- 19 957 850
- DE-A1-102006 062 345
- DE-A1-102009 049 122
- JP-A- 2002 192 665
- US-A- 5 938 881
- Steffen Felzer ET AL: "Unlimited Design Possibilities", Kunststoffe international 2010/03, 1. März 2010 (2010-03-01), Seiten 31-33, XP55012615, Gefunden im Internet: URL:http://www.grafe.com/fileadmin/content /PDF/Presse_Downloads/2_Unlimited_design_P ossibilities.pdf [gefunden am 2011-11-21]

## Beschreibung

### TECHNISCHES GEBIET

Die Erfindung betrifft ein Interieurbauteil für ein Fahrzeug mit einer Sichtseite, die im Gebrauch von einem Betrachter optisch wahrnehmbar ist. Ferner betrifft die Erfindung ein Verfahren zum Herstellen eines Interieurbauteils für ein Fahrzeug.

Zierteile in einem Kraftfahrzeug werden heutzutage üblicherweise mit einer verzierten Oberfläche ausgeführt, mit einem Zierstoff wie beispielsweise Leder bespannt oder mit Zierhölzern oder Aluminiumteilen versehen. Dabei entsteht der Wunsch nach neuen Möglichkeiten, die sichtbare Oberfläche eines Interieurbauteils für ein Fahrzeug neuartig zu gestalten. Gerade für Fahrzeuge des gehobenen Preissegments ist von besonderer Bedeutung, dass die verzierten Oberflächen einen hochwertigen Eindruck vermitteln, ohne, beispielsweise aufgrund zu hoher Empfindlichkeit, für den Alltagsgebrauch nur beschränkt einsetzbar zu sein.

In der DE 10 2006 062 345 A1 wird ein dreidimensionales Dekorformteil beschrieben, dessen Oberfläche mit Reliefs oder 3-D-Prägungen versehen ist. Das dort beschriebene Dekorelement besteht aus einer Folie und einer daran befestigten Faserschicht, wobei die Folie im Hochdruckformverfahren unter Einsatz eines fluiden Druckmittels wie gewünscht geformt wird.

Ein derartiges Dekorelement ist jedoch nur für eine begrenzte Oberflächengestaltung geeignet, weil die Umformung der Folie nur zur Ausbildung bestimmter reliefartiger Oberflächengestaltungen geeignet ist und ansonsten keine Verzierungselemente des Dekorelements ermöglicht. Aus diesem Grund wird in der oben genannten Druckschrift auch davon ausgegangen, dass auf die Fasermaterialien insbesondere ein Furnier aufgetragen wird oder ein Leder oder Kunstleder auf die Folie der Unterseite aufgetragen wird, um ein 3D-Formteil zu bilden.

US 5 938 881 A offenbart ein Verfahren zur Herstellung eines Dekormaterials, bei dem eine Stützplatte, eine zweite Klebeschicht, eine poröse Dekorschicht, eine dritte transparente Klebeschicht und eine transparente Folie nacheinander auf eine erste Klebeschicht aufgebracht und dann laminiert werden.

DE 199 57 850 A1 beschreibt ein flächiges Bezugsmaterial, das auf eine zu beschichtende Trägerteiloberfläche aufgebracht wird.

DE 101 36 125 A1 betrifft ein Schichtverbundmaterial, wobei eine polyolefinische Trägerschicht, eine darauf angeordnete Zwischenlage mit einem Polymermaterial und eine auf der Zwischenlage angeordnete hitzegehärtete Schicht vorgesehen sind und auf der hitzegehärteten Schicht eine Deckschicht aus thermoplastischem Kunststoff ausgebildet ist.

### DARSTELLUNG DER ERFINDUNG

Die Aufgabe der vorliegenden Erfindung besteht darin, ein Interieurbauteil für ein Fahrzeug des oben genannten technischen Gebiets bereitzustellen, das eine vielseitige definierte künstliche Oberflächengestaltung des Dekorelements ermöglicht.

Die Aufgabe wird durch den Gegenstand des Anspruchs 1 sowie den Gegenstand des Anspruchs 7 gelöst. Vorteilhafte Ausführungsformen der vorliegenden Erfindung werden insbesondere in den abhängigen Ansprüchen definiert.

Erfindungsgemäß umfasst ein Interieurbauteil für ein Fahrzeug eine Sichtseite, die im Gebrauch von einem Betrachter optisch wahrnehmbar ist, und ein Faserverbundelement mit einer Oberfläche, die zumindest einen Teil der Sichtseite bildet, wobei das Faserverbundelement zumindest teilweise derart verpresst ist, dass die Oberfläche des Faserverbundelements eine definierte künstliche Oberflächengestaltung aufweist.

Die "Sichtseite" des Interieurbauteils ist dabei diejenige Seite, die im in das Fahrzeug eingebauten Zustand des Interieurbauteils sichtbar ist. Die Sichtseite ist somit dazu gedacht, eine zierende Funktion auszuüben.

Der "Gebrauch" des Interieurbauteils ist so zu verstehen, dass das Interieurbauteil in diesem Zustand an seinem vorgesehenen Ort in das Fahrzeug eingebaut ist.

Ein "Betrachter" im Sinne des Anspruchs kann bevorzugt ein Insasse des Fahrzeugs sein. Jedenfalls ist die Sichtseite, die im Gebrauch von einem Betrachter optisch wahrnehmbar ist, so zu verstehen, dass sie ohne gebrauchs-untypische Veränderungen am Fahrzeug, wie etwa dem Ausbau von Fahrzeugteilen, und nicht nur von unzugänglichen Orten, wie etwa von unterhalb des Fahrzeugs oder aus engen Nischen des Fahrzeuginnenraums zu sehen ist.

Unter einem "Faserverbundelement" sind verschiedenste Verbundmaterialien zu verstehen, die künstliche, natürliche und/oder metallische Fasern, auch in recycelter Form enthalten. Insbesondere ist unter einem Faserverbundelement also ein Element aus Naturfasern (Hanf, Jute, Kenaf, Sisal, Flachs, Soja, Zellulose, Holz, Papier, ...), Kunstfasern (Polyester, Polyamid, Polyacralnitril, Polypropylen, Polyurethan, ...), Metallfasern und/oder Naturfaser- oder sonstiger Faserverbundwerkstoffen wie zum Beispiel NF-Acryl (Naturfaser-Acryl), NF-PP (Naturfaser-Polypropylen), NFPU (Naturfaser-Polyurethan) zu verstehen. Faserverbundwerkstoffe bestehen in der Regel aus einer Matrix sowie verstärkenden Fasern. Bei der Matrix kann es sich um Duroplaste, Thermoplaste und/oder Elastomere handeln. Es können auch Biopolymere zum Einsatz kommen. Die Matrix kann in Form von Fasern, Partikeln, Pulver, Kunststoffschichten, Schaumschichten und/oder Klebstoff vorliegen. Die Fasern können in Form von Vliesen, Matten, Textilien, Textilvliesen, Fasermehl, Faserpartikeln, Faserpulver oder/und Fasergemischen vorliegen. Die Faserverbundelemente können auch mehrschichtig sein und aus einer Kombination verschiedener der oben genannten Materialien bestehen.

Durch das Verpressen des Faserverbundelements werden gezielte Oberflächenstrukturen und damit verbunden optische Effekte auf der Sichtseite des Faserverbundelements erzeugt. Das Faserverbundelement kann dabei insbesondere als Fasermatte, oder Faserverbundmatte mit synthetischen, natürlichen, metallischen oder Mischungen aus diesen Fasern vorliegen. Auch kann es bevorzugt sein, das Faserverbundelement vor dem erfindungsgemäßen Verpressen einem oder mehreren, ggf. auch nur partiellen Vorverpressschritt(en) zu unterziehen, um eine geeignete Konsistenz und Beschaffenheit des Faserverbundelements für das Verpressen zum Erzeugen der künstlichen Oberflächengestaltung zu erhalten.

Das Verpressen des Faserverbundelements ermöglicht eine große Vielfalt optischer Effekte auf der Sichtseite des Interieurbauteils, da nicht nur eine reliefartige Beeinflussung des Faserverbundelements, sondern durch farbliche oder grundsätzlich auch andere optische Effekte, z. B. Reflexion, eine Beeinflussung der Gestaltung der Oberfläche ermöglicht wird. Auch die Erzeugung bionischer Strukturen ist möglich.

Erfindungsgemäß ist ferner eine mehrschichtige Schutzschicht vorgesehen.

Bevorzugt ist die Schutzschicht durch eine vorteilhafterweise flüssigkeitsdichte Folie und/oder Beschichtung gebildet. Die Schutzschicht ist dabei auf der sichtbaren Oberfläche des Faserverbundelements aufgebracht, um z. B. Flüssigkeiten daran zu hindern, in das Faserverbundelement einzutreten. Bei Bedarf können auch alle übrigen Seiten des Faserverbundelementes mit einer vorzugsweise flüssigkeitsdichten Schutzschicht versehen werden. Die Transparenz der Schutzschicht im Sichtbereich stellt die im Sinne der Erfindung gewünschte Sichtbarkeit des Faserverbundelements selbst sicher. Zur Erzeugung besonderer optischer Effekte kann die Schutzschicht aber auch partiell nicht transparent sein. Die Folie oder die Beschichtung können darüber hinaus auch weitere positive Eigenschaften, wie z.B. Erhöhung der Kratzfestigkeit, Schutz vor UV-Strahlung, Reduzierung von Verschleißerscheinungen,... aufweisen. Somit kann die Alltagstauglichkeit des Interieurbauteils erhöht werden. Insbesondere ist es bevorzugt, dass die verschiedenen Schichten der Schutzschicht hinsichtlich Material und Beschaffenheit entsprechend ihrer Aufgabe gewählt werden.

So wird die mit der die Sichtseite bildenden Oberfläche des Faserverbundelements in Kontakt stehende Schicht der Schutzschicht bevorzugt so ausgelegt, dass eine optimale Haftung der Schutzschicht an dem Faserverbundelement gewährleistet wird. Diese Haftung soll insbesondere im Rahmen eines Aufschmelzens dieser untersten Schicht ohne Vorsehen zusätzlicher Klebemittel erzielbar sein. Vor diesem Hintergrund ist die mit der Oberfläche des Faserverbundelements in Kontakt stehende Schicht der Schutzschicht aus einem Material auf Basis des für das Faserverbundelement gewählten Matrixmaterials auszubilden. So ist es bei einem Naturfaser-Polypropylen-Faserverbundelement bevorzugt die Schicht auf Polypropylenbasis auszubilden.

Die äußerste Schicht der Schutzschicht hingegen, d. h. die der Oberfläche des Verbundelements abgewandte Schicht der Schutzschicht erfüllt primär die Anforderungen an Flüssigkeitsdichtigkeit, Erhöhung der Kratzfestigkeit, UV-Beständigkeit, etc., um die Alltagtauglichkeit des Interieurbauteils zu erhöhen.

Darüber hinaus ist es bevorzugt eine oder mehrere vorzugsweise zwischen der äußersten und innersten Schicht vorgesehene Schichten einzufärben, um eine gewünschte Farbgebung zu realisieren. Dennoch sollten alle Schichten einen gewissen Transparenz bewahren, so dass das Faserverbundelement im Gebrauch von einem Betrachter optisch wahrnehmbar bleibt, d. h. insbesondere seine Faserstruktur.

Dabei ist es bevorzugt, dass die Schutzschicht eine Stärke in einem Bereich zwischen 180 und 220 µm, vorzugsweise 190 und 210 µm aufweist.

Bevorzugt weist das Faserverbundelement vor dem Verpressen eine Dicke von 1,0 bis 60 mm auf. Ein Faserverbundelement, insbesondere eine Naturfasermatte oder Kunstfasermatte dieser Dicke ist für das erfindungsgemäße Verfahren besonders gut geeignet.

Mit Vorteil, nicht explizit beansprucht, ist das Faserverbundelement mit einem Verpressungsgrad von 15 % bis 90 % verpresst, so dass die Oberfläche des Faserverbundelements eine besonders hochwertige definierte künstliche Oberflächengestaltung aufweist. Dieser Verpressungsgrad kann auch den Grad einer Vorverpressung bezeichnen. In diesem Fall wird das Faserverbundelement beim Verpressen zum Erzeugen der definierten künstlichen Oberflächengestaltung noch weiter verpresst. Darüber hinaus ist es auch möglich, verschiedene Bereiche eines Faserverbundelements mit unterschiedlichen Verpressungsgraden zu versehen.

Sofern das Faserverbundelement eine Fasermatte, insbesondere eine Naturfasermatte ist, kann diese auch als Duo- oder Trilaminatschichtung, gegebenenfalls mit eingearbeitetem Fasergewebe vorliegen.

In einer bevorzugten, nicht explizit beanspruchten Ausführungsform weist die die definierte künstliche Oberflächengestaltung aufweisende Oberfläche verschieden gestaltete Oberflächenbereiche auf. Eine solche Ausführungsform des Interieurbauteils ermöglicht eine zusätzliche Vielfalt der Oberflächengestaltung.

Unter verschieden gestalteten Oberflächenbereichen sind hier diskrete Bereiche zu verstehen, die sich in zumindest einem Merkmal ihrer Gestaltung grundlegend von anderen Bereichen der Oberfläche unterscheiden. Ferner ist vorgesehen, dass die Oberfläche des Interieurbauteils selbst die verschiedenen Bereiche aufweist, das heißt ein möglicherweise in das Interieurbauteil eingelassenes Funktionselement, beispielsweise ein Lüftungsfenster, ein Bedienelement oder eine Anzeige werden nicht als Teil des Interieurbauteils angesehen.

Mit Vorteil ist das Faserverbundelement im Wesentlich flüssigkeitsdicht ausgeführt. Die flüssigkeitsdichte Ausführung des Faserverbundelements hat für das Interieurbauteil einer erhöhten Alltagstauglichkeit zur Folge, da auf diese Weise auf das Faserverbundelement gelangende Flüssigkeiten nicht ohne weiteres in das Faserverbundelement eindringen können und somit das Erscheinungsbild des Interieurbauteils nicht nachhaltig beeinflussen.

In einer bevorzugten, nicht explizit beanspruchten Ausführungsform weist das Faserverbundelement zumindest zwei verschieden gestaltete Bereiche eines Fasermaterials auf. Das Fasermaterial, das gleichzeitig für beide verschieden gestalteten Bereiche verwendet wird, kann beispielsweise durch einen unterschiedlichen Verpressungsgrad oder eine Färbung oder dergleichen unterschiedlich gestaltet sein und somit zur vielfältigen Gestaltung der Sichtseite des Interieurbauteils beitragen.

In einer weiteren bevorzugten, nicht explizit beanspruchten Ausführungsform weist das Faserverbundelement zumindest zwei Bereiche verschiedener Fasermaterialien auf. Die zwei Bereiche verschiedener Fasermaterialien können nebeneinander auf der sichtbaren Oberfläche und/oder hintereinander auf dieser Oberfläche vorgesehen sein. In beiden Fällen lässt sich auf diese Weise eine Vielzahl möglicher optischer Effekte auf der Oberfläche des Interieurbauteils erzielen. Bevorzugt, nicht explizit beansprucht, weist das Faserverbundelement zumindest zwei Bereiche, bevorzugt zwei Schichten, verschiedener Dichten (Raumgewicht, Flächengewicht), insbesondere verschiedener Faserdichten, auf.

Durch die Verwendung verschiedener Dichten können verschiedene optische Effekte für die Oberfläche des Faserverbundelements erzielt werden. Daneben führt die Verwendung verschiedener Dichten dazu, dass ein Bereich des Faserverbundelements mit einer speziellen Dichte versehen ist, die auf die in diesem Bereich zu erfüllenden Anforderungen angepasst, beispielsweise besonders hoch ist. Dagegen können andere Bereiche des Interieurbauteils beispielsweise eine geringere Dichte aufweisen, so dass das gesamte Interieurbauteil möglichst leicht wird. Eine höhere Dichte ist vorzugsweise für unmittelbar an der Oberfläche liegende Schichten des Faserverbundelements vorgesehen, wobei die Dichte bei mehreren untereinander liegenden Schichten bevorzugt von der Oberfläche in Richtung der Rückseite des Interieurbauteils abnehmen kann. Darüber hinaus sind aber auch andere Varianten denkbar. So kann z.B. bei einem dreischichtigen Aufbau die mittlere (neutrale) Schicht die Schicht mit der geringsten Dichte sein.

In einer bevorzugten, nicht explizit beanspruchten Ausführungsform weist das Faserverbundelement zwei sichtbare Bereiche auf, die voneinander entlang einer Trennfläche sichtbar getrennt sind, wobei die Trennfläche die sichtbare Oberfläche schneidet.

Die sichtbaren Bereiche gemäß dieser Ausführungsform sind als diskrete Teile eines Faserverbundelements zu verstehen, die im Bereich der Trennfläche miteinander zu einem Element verbunden sind. Die Trennfläche schneidet die sichtbare Oberfläche, so dass die Trennfläche als eine Trennlinie zwischen den zumindest zwei sichtbaren Bereichen wahrgenommen wird. Mit Vorteil enthält das Faserverbundelement eine Vielzahl solcher voneinander getrennter sichtbarer Bereiche, die insbesondere verschiedene Fasermaterialien, verschiedene Verpresseigenschaften oder andere optische Eigenschaften aufweisen können.

Besonders bevorzugt ist dabei zwischen den zwei Bereichen ein Formteil vorgesehen, um die Bereiche voneinander zu trennen. Ein solches Formteil ermöglicht eine besonders präzise definierte Grenzfläche zwischen benachbarten Bereichen des Faserverbundelements, die sonst gegebenenfalls eine durch die Materialeigenschaften bedingte Unschärfe aufweisen würde.

Mit Vorteil, nicht explizit beansprucht, weist das Faserverbundelement abhängig von der Position in Bezug auf die Oberfläche verschiedene Dichten auf. Diese bevorzugte Ausführungsform ermöglicht über die Variation der Dichte des Faserverbundelements entlang der Oberfläche eine entsprechende Variation des optischen Eindrucks, den die Oberfläche des Interieurbauteils vermittelt. Auch die Variation der Dichte des Faserverbundelements erhöht somit die mögliche Oberflächengestaltung des Interieurbauteils.

Mit Vorteil, nicht explizit beansprucht, weist das Faserverbundelement ferner abhängig von der Position in Bezug auf die Oberfläche verschiedene Dicken auf. Eine Dickenvariation des Faserverbundelements führt ebenfalls zu einer Variation des optischen Eindrucks der Oberfläche des Interieurbauteils. Einerseits ist es möglich, dass das Faserverbundelement an Orten, die vor dem Verpressen eine größere Dicke aufweisen, nach dem Verpressen eine höhere Dichte aufweist, andererseits ist auch die Bildung eines Reliefs durch die verschiedenen Dicken je nach Anwendung möglich und gewünscht.

Bevorzugt, nicht explizit beansprucht, kann das Faserverbundelement zusätzlich zur ggf. bereits vorhandenen Matrix mit verschiedenen Arten von Kunststoffen versehen werden. Der Kunststoff kann dabei ein eingestreutes Material zwischen die Fasern des Faserverbundelements oder verschiedene Arten von Kunstfasern aus Kunststoff (auch Bicofasern) sein. Darüber hinaus ist ein, auch nur partielles Besprühen, Bepulvern, Eintauchen, Injizieren, Beschichten, Tränken, Bedampfen, Bespritzen usw. mit Polymeren möglich.

Der Kunststoff des Faserverbundelements ist in dieser bevorzugten Ausführungsform mit besonderem Vorteil derart über die Oberfläche verteilt, dass sich entsprechend dieser Verteilung verschiedene Gestaltungsbereiche der Oberfläche des Faserverbundelements ergeben. Der Kunststoff (sowohl die ggf. vorhandene Matrix als auch der zusätzlich aufgebrachte Kunststoff) in dem Faserverbundelement kann somit als ein Mittel zum Gestalten der Oberfläche des Interieurbauteils eingesetzt werden. Das heißt, dass die Wahl des Kunststoffs des Faserverbundelements in Abhängigkeit von der gewünschten Oberflächengestaltung vorgenommen werden kann oder Kunststoff verschiedener Art gezielt in das Faserverbundelement eingebracht werden kann, um später Teile der Oberfläche des Interieurbauteils entsprechend zu gestalten.

In einer weiteren bevorzugten, nicht explizit beanspruchten Ausführungsform weist das Faserverbundelement verschiedene Arten von Fasern auf. Die verschiedenen Arten von Fasern können verschieden geartete Kunststofffasern, verschieden geartete Naturfasern oder verschieden geartete Metallfasern sein, wobei Fasern miteinander auch gemischt werden können. Auch die Verwendung von recycelten Fasern ist möglich. Eine solche Ausführung des Faserverbundelements ermöglicht eine besonders große Vielfalt von Oberflächengestaltungen des Interieurbauteils.

Ein erfindungsgemäßes Verfahren zum Herstellen eines Interieurbauteils für ein Fahrzeug, wie es vorstehend beschrieben wurde, umfasst ein Verpressen eines Faserverbundelements, so dass das Faserverbundelement danach zumindest an einer Sichtseite des Interieurbauteils eine definierte künstliche Oberflächengestaltung aufweist.

Das erfindungsgemäße Verfahren ermöglicht die Herstellung eines Interieurbauteils mit den oben genannten Vorteilen. Insbesondere lässt sich auf diese Weise ein hochwertig anmutendes Interieurbauteil eines Fahrzeugs erstellen, das eine große Vielfalt von Ausgestaltungen ihrer Oberfläche ermöglicht, wobei insbesondere neuartige optische und strukturelle Effekte erzielt werden können.

Mit Vorteil, nicht explizit beansprucht, wird vor dem Verpressen des Faserverbundelements eine Vorbehandlung des Faserverbundelements durchgeführt. Ein bevorzugtes Verfahren umfasst somit ein Vorbehandeln, insbesondere ein Vorverpressen, nach Bedarf auch nur partiell, vor dem Verpressen des Faserverbundelements.

In einer bevorzugten, nicht explizit beanspruchten Ausführungsform umfasst das Verfahren ein Vorsehen verschiedener Arten von Kunststoff in dem Faserverbundelement. Diese verschiedenen Arten von Kunststoff in dem Faserverbundelement ermöglichen eine große Variation möglicher Oberflächengestaltung.

Weiter umfasst das Verfahren bevorzugt, nicht explizit beansprucht, ein Vorsehen verschiedener Arten von Fasern in dem Faserverbundelement. Das Vorsehen verschiedener Arten von Fasern in dem Faserverbundelement ermöglicht eine besonders einfache Herstellung eines Interieurbauteils mit einer großen Vielfalt möglicher Oberflächengestaltungen.

In einer bevorzugten, nicht explizit beanspruchten Ausführungsform wird das Verpressen des Faserverbundelements bei verschiedenen Temperaturen, abhängig von der Position in Bezug auf die sichtbare Oberfläche, durchgeführt. Das bedeutet, dass ein Temperaturgradient über die Oberfläche beim Verpressen des Faserverbundelements vorgesehen ist, wodurch ebenfalls eine einzigartige Oberflächengestaltung möglich ist. Je nach Temperatur erhält die Oberfläche des Faserverbundelements eine eigene optische Erscheinung, so dass durch Steuerung der Temperatur auch die Oberflächengestaltung gesteuert werden kann.

In einer weiteren bevorzugten, nicht explizit beanspruchten Ausführungsform wird das Verpressen des Faserverbundelements bei verschiedenen Drücken, abhängig von der Position in Bezug auf die sichtbare Oberfläche, durchgeführt. Das Erscheinungsbild, das heißt die Oberflächengestaltung, des Faserverbundelements variiert in Abhängigkeit vom Druck, der auf das Faserverbundelement ausgeübt wird. Somit wird durch das Vorsehen eines Druckgradienten über die Oberfläche des Faserverbundelements eine Variation der optischen Erscheinung der Oberfläche des Interieurbauteils ermöglicht, die auf sehr einfache Weise realisiert werden kann.

In einer bevorzugten, nicht explizit beanspruchten Ausführungsform des Verfahrens werden anschließend mehrere verpresste Faserverbundelemente zu einem Faserverbundmaterialblock verbunden, von dem danach ein neues Faserverbundelement abgetrennt wird, wobei das neue Faserverbundelement insbesondere derart von dem Faserverbundmaterialblock abgetrennt wird, dass es Teile von zumindest zwei, bevorzugt mehreren, besonders bevorzugt allen verpressten Faserverbundelementen aufweist.

Auf diese Weise lässt sich besonders effizient ein Interieurbauteil mit einer Oberfläche herstellen, die mehrere diskrete Teile von Faserverbundelementen enthält, welche ihrerseits ein neues Faserverbundelement bilden. Somit lassen sich besonders effizient auch viele Bereiche stark unterschiedlich gearteter oder vorbehandelter Faserverbundelemente miteinander verbinden und daraus ein auch sehr leicht individualisierbares Interieurbauteil erstellen.

Mit Vorteil, nicht explizit beansprucht wird das Faserverbundelement danach zu einem selbsttragenden Interieurbauteil endverpresst. Durch das Endverpressen enthält das Faserverbundelement eine besonders hohe Festigkeit, so dass es als selbsttragendes Interieurbauteil eingesetzt werden kann und nicht auf einen Träger aufgebracht werden muss. Dies hat eine Gewichtseinsparung zur Folge, die insbesondere für Fahreigenschaften und Energieverbrauch eines Kraftfahrzeugs von Vorteil sein kann. Auch die Erzeugung von tragenden oder stützenden bionischen Strukturen ist möglich.

Alternativ ist es möglich, dass das Faserverbundelement danach zumindest partiell als Dekorschicht auf einen Träger aufgebracht wird. Der Vorteil des Aufbringens des Faserverbundelements als Dekorschicht auf einen Träger liegt in der größeren Stabilität und Festigkeit des daraus resultierenden Interieurbauteils, weil der Träger gegebenenfalls besonders stabil ausgeführt werden kann.

Erfindungsgemäß wird auf das Faserverbundelement eine transparente Schutzschicht, insbesondere zum Schutz gegen Flüssigkeiten, UV-Strahlung, Abrieb, Verkratzen, ... aufgebracht. Die Schutzschicht kann vor dem Verpressen oder nach dem Verpressen des Faserverbundelements auf dieses aufgetragen werden. Durch die transparenten Eigenschaften der Schutzschicht, die beispielsweise durch eine Folie, einen transparenten Lack oder eine ähnliche Beschichtung gebildet sein kann, wird ermöglicht, dass das Faserverbundelement zumindest teilweise die sichtbare Oberfläche und damit die Vielzahl möglicher optischer Oberflächengestaltungen weitestgehend bewahrt. Alternativ ist es denkbar, je nach gewünschter Oberflächengestaltung partiell, teiltransparente oder nicht transparente Schutzschichten zu verwenden. Dabei werden mehrschichtige Systeme oder Folien (z.B. Grundierung, Decklack, ...) verwendet. Bei mehrschichtigen Folien werden die verschiedenen Schichten, wie oben bereits erläutert, vor dem Hintergrund ihrer Aufgabe gewählt. So wird zum Verbinden der mehrschichtigen Folie mit dem Faserverbundelement die Kontakt- bzw. Haftschicht, d. h. die mit dem Faserverbundelement in Kontakt stehende Schicht auf Basis des Matrixmaterials des Faserverbundelements ausgebildet, so dass durch Aufschmelzen dieser Schicht eine Verbindung mit dem Faserverbundelement realisiert werden kann, ohne dass zusätzliche Klebemittel oder andere die Haftung verstärkende Mittel eingebracht werden müssen. Die äußerste Schicht sowie Zwischenschichten dienen einerseits dem Schutz gegen Flüssigkeiten, UV-Strahlung, Abrieb, Verkratzen, etc. und andererseits einer möglichen Farbgebung, wobei eine oder mehrere Schichten eingefärbt sein können, aber noch immer transparent bzw. semi-transparent verbleiben, so dass die Struktur der Fasern des Faserverbundelements sichtbar bleibt.

Das Faserverbundelement oder Teile davon können auch gefärbt werden, um weitere optische Effekte des Interieurbauteils zu erzeugen. Das Färben kann bevorzugt bei der Herstellung eines unverpressten Faserverbundelements oder während seiner Vorbehandlung durch z.B. Tränken des Faserverbundelementes durchgeführt werden. Alternativ können auch die Fasern selbst vor dem Herstellen des Faserverbundelementes gefärbt werden. Auch hier wird bevorzugt, dass das Faserverbundelement eine Fasermatte, eine Faserverbundmatte, eine Naturfasermatte oder eine Naturfaserverbundmatte ist.

Ferner können während einer Vorbehandlung Nuten in dem Faserverbundelement erzeugt und Einleger in das Faserverbundelement eingelegt werden. Statt Nuten können auch vollständige Durchbrüche durch das Faserverbundelement erzeugt werden, die wiederum mit Einlegern gefüllt werden können. Daneben können auch Perforationen des Faserverbundelements eingebracht werden, die zu weiteren Effekten der Oberflächengestaltung führen können.

Das Faserverbundelement kann auch vor dem Verpressen mit Streifen eines anderen Materials belegt werden. Daneben ist es auch möglich, Streifen desselben Materials wie das Faserverbundelement auf dieses aufzulegen, so dass beim Verpressen des Faserverbundelements mit den Streifen eine den Streifen entsprechende Variation in der Oberflächengestaltung erzeugt werden kann. Auch das (partielle) Aufbringen von Materialien durch z.B. Aufsprühen, Aufspritzen, Metallisieren, Fasersprühen ... ist möglich. Es können auch verschiedene Faserverbundelemente, insbesondere verschiedene Fasermatten nebeneinander gelegt und bevorzugt mit einander vernäht werden, bevor sie erfindungsgemäß verpresst werden.

Für das Verpressen des Faserverbundelements kann besonders bevorzugt ein flexibles Werkzeugelement eingesetzt werden. Ein solches flexibles Werkzeugelement ist besonders wirkungsvoll bei vorbehandelten Faserverbundmatten, zum Beispiel mit aufgelegten Streifen oder anderen der oben genannten Vorbehandlungsmöglichkeiten.

Daneben können auch strukturierte Werkzeugoberflächen, beispielsweise in Form einer Narbung oder dergleichen verwendet werden, die dazu geeignet sind, ihre Struktur auf das Faserverbundelement zu übertragen, während dieses verpresst wird. Ferner werden Kombinationen der verschiedenen einzeln oben aufgeführten Möglichkeiten zur Oberflächengestaltung des Interieurbauteils bevorzugt, um eine noch größere Vielfalt zu erlangen.

Bezüglich des Endverpressens des Faserverbundelements zu einem selbsttragenden Interieurbauteil kann beispielsweise ein konventionelles Pressverfahren mit Ober- und Unterwerkzeug und/oder ein flexibles Werkzeugelement eingesetzt werden.

Besonders bevorzugt für alle Pressvorgänge ist das sogenannte **H**(igh)**P**(ressure)**F**(orming)-Verfahren. Bei dieser Hochdruckverformung wird das zu verpressende Material mit einem fluiden Druckmittel beaufschlagt. Durch die Anwendung des Verfahrens ist die Herstellung von Bauteilen mit komplexen Formen und Konturen mit hoher Reproduzierbarkeit möglich. Das Medium, das den Druck überträgt, kann z.B. eine flexible Haut sein, die eine entsprechende Narbung auf das zu verpressende Bauteil übertragen kann. Darüber hinaus ist das HPF-Verfahren geeignet, dynamische bzw. organische Oberflächenstrukturen zu erzeugen. Werden Faserverbundelemente mit partiell unterschiedlichen Dichten oder sonstigen Inhomogenitäten verwendet, ergeben sich durch die Anwendung des HPF-Verfahrens z.B. unterschiedliche Einfalltiefen oder andere attraktive Oberflächenstrukturen am verpressten Bauteil. Des Weiteren ist die Aufbringung unterschiedlicher Drücke an unterschiedlichen Stellen des zu verpressenden Bauteils möglich.

Es können beispielsweise auch verschiedenfarbige Schichten, beispielsweise Fasermatten, gesamthaft oder in Teilbereichen übereinandergeschichtet werden, bevor sie verpresst werden, um eine optisch anspruchsvolle Oberflächenstruktur zu erzeugen.

Zur Herstellung eines Dekorteils aus Naturfasern wird eine Naturfaserverbundmatte, möglicherweise mit partiell unterschiedlichen Dicken, aus z.B. Nafacryl, NF-PP oder NFPU vorverpresst, wobei eine Variation von Druck und Wärme über eine Fläche der Fasermatte angewendet wird, um eine entsprechend variierende Gestaltung der Matte bereits im Vorverpress-Stadium zu erzielen. Auf diese Weise können auch dreidimensional geformte Matten hergestellt werden, die anschließend durch das erfindungsgemäße Verpressen zu einem Interieurbauteil weiterverarbeitet werden können.

Das Ergebnis dieses Vorverpressens sind sogenannte, auch dreidimensional geformte Halbzeugmatten, die vor ihrem erfindungsgemäßen Verpressen weiterbearbeitet werden. Insbesondere werden die Halbzeugmatten gestanzt, gefräst, geschliffen, gelasert, gespalten oder geschnitten. Es ist auch möglich, das bekannte Schärfspaltverfahren auf die Halbzeugmatten anzuwenden. Bei dem Schärfspaltverfahren wird die Halbzeugmatte auf eine mit einem Relief versehene Unterlage gelegt und anschließend ein Spaltvorgang entlang einer Ebene durchgeführt, die sich z. B. etwas oberhalb der reliefbehafteten Oberfläche erstreckt. Der Spaltvorgang wird beispielsweise durch ein Messer durchgeführt, das entlang einer Ebene verläuft. Das Messer läuft während des Schärfspaltprozesses durch die Halbzeugmatte, die jedoch nicht vollständig parallel zu der Schnittebene angeordnet ist, sondern sich, dem Relief der Unterlage folgend, unterschiedlich weit nach oben über die Schnittebene hinaus erstreckt. Somit weist das Halbzeug nach dem Schärfspalten unterschiedlich dicke Bereiche auf, wobei die Verteilung und Ausgestaltung der Bereiche vom Relief der Unterlage der Halbzeugmatte abhängt. Es hat sich herausgestellt, dass auch vorverpresste Matten mit unterschiedlichen Vorverpressungsgraden schärfspaltbar sind.

Auf diese Weise ist es möglich, aus dem Halbzeug einen konturierten Rohling zu erzeugen, der durch das erfindungsgemäße Verfahren weiterverarbeitet werden kann.

Die Halbzeugmatte kann selektiv mit Nuten, Ausnehmungen, Einschnitten und dergleichen versehen werden, die ihrerseits mit einem geeigneten Füllmaterial aufgefüllt werden können.

Als Füllmaterial eignen sich beispielsweise Einlagen aus Echtmetall, Metallimitation, Textil, Vlies, Folie, Naturfaser, Naturfaserverbund, Faser, Faserverbund, Papier, Papierfaserverbund oder Kombinationen dieser Materialien. Die Füllmaterialien können darüber hinaus gewoben, gewirkt, gestrickt, geflochten, gestanzt, gelocht, gefräst, geschliffen oder geschichtet sein. Daneben kann auch Kunststoff oder Lack oder dergleichen in die Ausnehmungen in der Halbzeugmatte eingefügt werden.

Danach kann der Rohling durch das erfindungsgemäße Verpressen so gestaltet werden, dass das Faserverbundelement zumindest an einer Sichtseite des Interieurbauteils eine gewünschte definierte künstliche Oberflächengestaltung aufweist.

Das Verpressen kann dabei durch ein HPF-Pressverfahren oder ein anderes normales Pressverfahren mit Ober- und Unterwerkzeug durchgeführt werden. Anschließend wird der verpresste Rohling des Faserverbundelements beispielsweise zu einem Interieurbauteil endverpresst, das dadurch die nötige Festigkeit eines selbsttragenden Interieurbauteils erlangt.

Vor dem Verpressen des Rohlings können auf den Rohling gegebenenfalls Faserbüschel unterschiedlichster Farben, Holzpartikel oder Faserpartikel verschiedener Größen aufgelegt werden, die nach dem Verpressen in das Faserverbundelement integriert sind und zur optischen Oberflächengestaltung des Faserverbundelements beitragen. Beim Verpressen können unterschiedliche Dichten erzeugt werden, indem beispielsweise das Werkzeug zum Verpressen des Rohlings eine reliefartige Strukturierung aufweist, die zu einer unterschiedlichen Dichte des Faserverbundelements führt. Darüber hinaus können durch die Oberflächenstruktur des Werkzeugs beispielsweise Narbungen oder ähnliche Oberflächengestaltungen während der Verpressung erzeugt werden.

Gemäß einem alternativen Verfahren können vorbehandelte, insbesondere vorverpresste Faserverbundelemente, zum Beispiel Fasermatten, geschichtet und dann beispielsweise entlang der Schichtungsrichtung, das heißt im Wesentlichen senkrecht zur Ausrichtung der Rohlinge, geschnitten werden. Beim Schichten der Rohling werden diese bevorzugt miteinander verklebt oder anderweitig verbunden. Das Schneiden bringt dann einen neuen Rohling hervor, der auch ein Faserverbundelement ist und durch das erfindungsgemäße Verpressen zu dem Interieurbauteil weiterverarbeitet werden kann.

Bei der Herstellung eines Interieurbauteils ist es ebenfalls möglich, ein Naturfaserfurnier auf einen Träger aus Naturfaser- oder Naturfaserverbundmaterial aufzukaschieren oder aufzupressen. Das Naturfaserfurnier kann dabei vollflächig oder partiell aufgebracht werden. Dabei ist es unerheblich, ob der Naturfaserträger selbsttragend, formstabil oder flexibel ist. Das Naturfaserfurnier kann dabei Naturfaser, Naturfasergemische, ein Naturfaserverbundmaterial, Naturfasermehl, Naturfaserpartikel, Naturfaserpulver und dergleichen enthalten, aber auch aus einem Mehrschichtnaturfasermaterial bestehen. Daneben kann das Trägermaterial aber auch Textil, Polymere, Holz, Papier, Metall oder Vlies enthalten.

Das Aufkaschieren oder Aufpressen kann dabei durch ein Pressverfahren mit Ober- und Unterwerkzeug, ein Kaschierpressen, ein Gummituchverfahren oder ein HPF-Verfahren erfolgen. Das Gummituchverfahren ist ein Kaschierverfahren für luftdurchlässige Materialien, bei dem die benötigten Anpressdrücke über ein Gummituch aus Silikonkautschuk oder anderen wärmebeständigen Elastomeren aufgebracht werden.

Eine Strukturierung der Sichtseite des Interieurbauteils kann insbesondere durch die natürliche Konsistenz, Beschaffenheit, Inhomogenität, Anisotropie, Dichte, Farbe und Zusammenstellung des Halbzeugs oder durch zusätzliche Manipulation dieser Größen künstlich definiert werden.

Insbesondere können Strukturen durch natürliche oder künstlich erzeugte Oberflächenstrukturen, wie Ledernarben, künstliche Narben durch Abdrücke eines starren oder flexiblen Werkzeugs oder dergleichen entstehen. Diese Strukturen lassen sich durch eine geeignete Wahl der Materialien und Werkzeuge sowie die Zusammenstellung des Faserverbundelements definiert steuern, so dass eine definierte künstliche Oberflächengestaltung möglich ist. Diese Strukturen können dabei vollflächig oder partiell vorgesehen werden.

Mit den vorstehend beschriebenen Verfahren ist es möglich, die Haptik und die Dekoroptik eines Interieurbauteils weitgehend zu beeinflussen und dabei eine enorme Vielfalt möglicher Gestaltungen der Oberfläche zur Verfügung zu haben.

Es ist insbesondere auch möglich, eine dynamische oder organische Struktur zu erzeugen, wobei hierunter eine freie, flexible Oberflächenstruktur des Interieurbauteils zu verstehen ist, die durch eine natürliche oder künstliche Material-Inhomogenität oder -Anisotropie oder durch flexible Werkzeuge oder durch Kombinationen hiervon erzeugt werden kann.

Bei Aufbringen einer Schutzschicht, Versiegelung oder dergleichen ist es neben einer glasklar transparenten Schutzschicht gegebenenfalls bevorzugt, eine farblich transparente oder semitransparente Schutzschicht vorzusehen. Die Versiegelung, das Versehen mit einer Schutzschicht, kann sowohl während des Vorbehandelns des Faserverbundelements als auch während oder nach dem Verpressen aufgebracht werden.

Auf diese Weise lassen sich insbesondere auch Porositäten des Faserverbundelements abdecken oder ausfüllen. Dabei ist es einerseits möglich, dass die Versiegelung der räumlichen Strukturierung des Faserverbundelements folgt, um die Oberflächenstrukturierung des Interieurbauteils entsprechend der Oberflächenstrukturierung des Faserverbundelements zu gestalten. Daneben kann eine solche Versiegelung eine Strukturierung auch ausgleichen, um trotz einer optischen Strukturierung eine haptisch glatte Oberfläche bereitzustellen.

Zur Manipulation der Oberflächenstrukturierung kann insbesondere vor dem Versiegeln der Oberfläche ein Befräsen, Beschneiden, Beschleifen oder Polieren der Oberfläche des Faserverbundelements durchgeführt werden.

Das Faserverbundelement kann durch das Einbringen von Polymerfasern, Bindepartikeln, beispielsweise als Thermoplast oder Duroplast, in kompakter oder geschäumter Form oder eines Treibmittels weiter manipuliert werden.

Weitere Vorteile und Merkmale der Erfindung ergeben sich aus der nachfolgenden Figurenbeschreibung sowie der Gesamtheit der Patentansprüche.

### KURZE FIGURENBESCHREIBUNG

- Fig. 1a-d: zeigen ein integrales Faserverbundelement für ein Interieurbauteil eines Fahrzeugs mit Schichten unterschiedlicher Dicke.
- Fig. 2a: zeigt ein Faserverbundelement mit zwei Bereichen, die komplementär miteinander zusammengefügt sind.
- Fig. 2b: zeigt zwei Teile eines Faserverbundelements, die entlang einer möglichen Kontaktfläche eine Unschärfe aufweisen.
- Fig. 2c: zeigt zwei Teile eines Faserverbundelements mit einem Formteil zum Trennen der Bereiche.
- Fig. 3: zeigt ein mit einer bestimmten Oberfläche versehenes Faserverbundelement zum Verpressen.
- Fig. 4a-b: zeigt jeweils ein Interieurbauteil mit Einsatzmaterial in dem Faserverbundelement.
- Fig. 5: zeigt eine Schnittansicht eines Interieurbauteils mit verschiedenen Einlegern in Ausnehmungen des Faserverbundelements.
- Fig. 6: zeigt eine alternative Schnittdarstellung des Interieurbauteils aus Fig. 5.
- Fig. 7a: zeigte eine Matrize eines Faserverbundmaterials als Teil eines Interieurbauteils.
- Fig. 7b: zeigt eine Patrize, die zu der Matrize aus Fig. 7a passend ausgeführt ist.
- Fig. 7c: zeigt eine Schnittansicht eines Interieurbauteils, das aus der Matrize aus Fig. 7a und der Patrize aus Fig. 7b zusammengefügt ist.
- Fig. 8: zeigt ein Interieurbauteil, das nach dem Verpressen durch ein Endverpressen zu einem selbsttragenden Bauteil gemacht wurde.
- Fig. 9a-c: zeigt in einer Schnittdarstellung eine Bearbeitungsmöglichkeit für ein Faserverbundelement.
- Fig. 10: zeigt ein Faserverbundelement mit eingebetteten Strukturen und einer Versiegelungsschicht.
- Fig. 11: zeigt eine weitere mögliche Ausführungsform eines Interieurbauteils.
- Fig. 12: zeigt eine weitere Ausführungsform eines Interieurbauteils.

### WEGE ZUR AUSFÜHRUNG DER ERFINDUNG

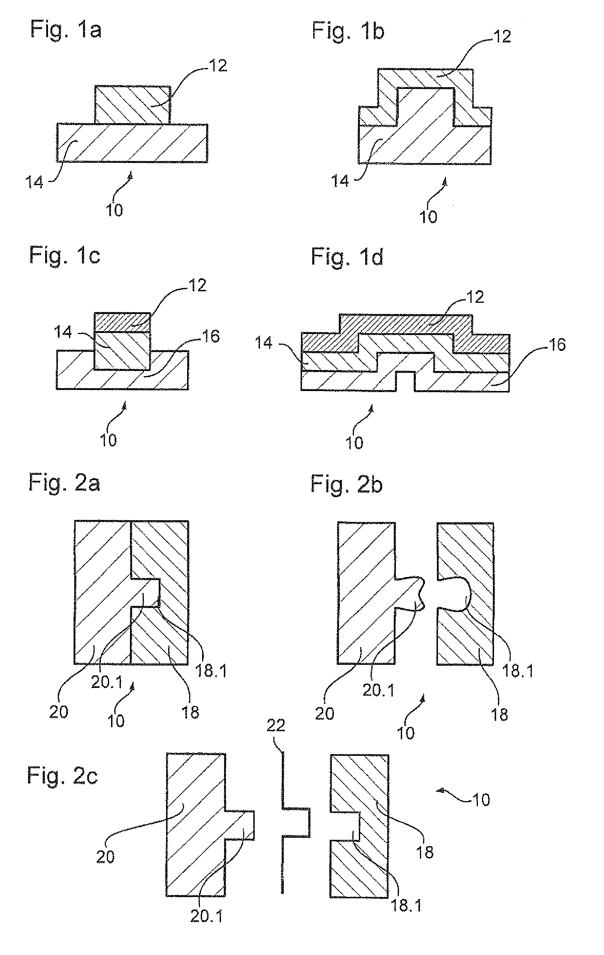

Fig. 1a zeigt eine erste Ausführungsform eines integralen Faserverbundelements 10 für ein Interieurbauteil. Das Faserverbundelement 10 weist zwei Bereiche 12, 14 verschiedener Dichten ρ1, ρ2 auf. Die Dichte ρ1 der ersten Schicht 12 ist dabei größer als die Dichte ρ2 der Schicht 14.

Durch die geringere Dichte ρ2 der zweiten Schicht 14 wird erreicht, dass die Masse des Faserverbundelements 10 insgesamt abnimmt, ohne optische Einbußen hinnehmen zu müssen.

Die erste Schicht 12 ist dabei nur teilweise auf der zweiten Schicht 14 angeordnet, so dass die zweite Schicht 14 nicht vollständig von der ersten Schicht 12 bedeckt wird.

Fig. 1b zeigt eine alternative Ausführungsform eines Faserverbundelements 10, bei dem eine erste Schicht 12 einer geringen Dichte ρ1 auf einer zweiten Schicht 14 einer höheren Dichte ρ2 aufgebracht ist. In dieser Ausführungsform bedeckt die erste Schicht 12 die zweite Schicht 14 vollständig. Dabei ist die Dicke der ersten Schicht 12 über die gesamte Oberfläche konstant, wogegen die Dicke der zweiten Schicht 14 variiert und somit zu einer reliefartigen Struktur führt.

Fig. 1c zeigt eine weitere alternative Ausführungsform des Faserverbundelements 10 mit drei im Wesentlichen geschichteten Bereichen 12, 14, 16 unterschiedlicher Dichten ρ1, p2, p3. Eine erste Schicht 16 einer geringen Dichte ρ3 enthält eine Ausnehmung, in die eine Schicht 14 einer etwas höheren Dichte ρ2 eingebracht wurde, wobei die zweite Schicht 14 derart in die Ausnehmung der ersten Schicht 16 eingefügt und bemessen ist, dass sie senkrecht zur Ebene der Oberfläche der ersten Schicht 16 über diese Oberfläche der ersten Schicht 16 hinausragt. Auf die Oberfläche der zweiten Schicht 14 wird eine dritte Schicht 12 einer Dichte ρ1 aufgetragen, wobei die Dichte ρ1 wiederum etwas größer als die Dichte ρ2 ist. Durch die reliefartige Querschnittsgestaltung des Faserverbundelements 10 der Fig. 1c, die im Wesentlichen der Reliefgestaltung des Faserverbundelements 10 in den Figuren 1a und 1b entspricht, wird auch hier durch das Verpressen eine optische Strukturierung der Oberfläche des Faserverbundelements 10 entsprechend der Reliefführung erzielt.

Fig. 1d zeigt ein Faserverbundelement 10, das aus drei durchgehenden und im Wesentlichen über ihre Länge gleichbleibend dicken Schichten 12, 14, 16 mit verschiedenen Dichten ρ1, p2, p3 zusammengesetzt ist. Das Relief des Faserverbundelements 10 entspricht beispielsweise dem Relief eines Trägers, auf den das Faserverbundelement 10 nach dem Verpressen aufgelegt werden kann.

Die Figuren 2a bis 2c zeigen jeweils ein Faserverbundelement 10 mit zwei Bereichen 18, 20, die jeweils derart auf der Oberfläche des Faserverbundelements 10 angeordnet sind, dass sie einen Teil der Sichtseite eines Interieurbauteils bilden können.

In Fig. 2a sind die zwei Bereiche 18, 20 exakt komplementär zueinander ausgeführt und der Bereich 18 weist eine Ausnehmung auf, in die ein Vorsprung des Bereichs 20 hineinpasst. Die Dimension des Vorsprungs des Bereichs 20 und die Dimension der Ausnehmung des Bereichs 18 des Faserverbundelements 10 sind derart aufeinander abgestimmt, dass die beiden Bereiche 18, 20 zu einem Faserverbundelement 10 zusammengefügt werden können, ohne dass an der Kontaktfläche zwischen den Bereichen 18, 20 Lücken entstehen.

Fig. 2b zeigt ebenfalls zwei Bereiche 18, 20 eines Faserverbundelements 10, wobei der Bereich 20 einen Vorsprung 20.1 und der Bereich 18 eine Ausnehmung 18.1 aufweist. Der Vorsprung 20.1 ist jedoch nicht genau passend zur Ausnehmung 18.1 ausgestaltet, so dass bei einer Verbindung der Bereiche 18, 20 zu einem Faserverbundelement 10 eine Lücke im Bereich des Vorsprungs 20.1 und der Ausnehmung 18.1 entstehen würde.

Die ungenaue Ausführung des Vorsprungs 20.1 und der Ausnehmung 18.1 in Bezug aufeinander lässt sich bei bestimmten Materialien des Faserverbundelements nur mit extrem großem Aufwand verhindern. Häufig treten dagegen Unschärfen in der Konturierung der Bereiche 18, 20 des Faserverbundelements 10 auf, die zu einer ungenauen Passung zwischen den Bereichen 18, 20 führen.

Fig. 2c zeigt eine Möglichkeit, eine genaue Passung eines Vorsprungs 20.1 in eine Ausnehmung 18.1 zu realisieren. In Fig. 2c sind zwei Bereiche 18, 20 eines Faserverbundelements 10 gezeigt, wobei wie in Fig. 2a und 2b der Bereich 18 eine Ausnehmung 18.1 und der Bereich 20 einen Vorsprung 20.1 aufweist, der zur Aufnahme in der Ausnehmung 18.1 des Bereichs 18 vorgesehen ist. Zwischen den Bereichen 18 und 20 ist gemäß der Ausführungsform der Fig. 2c eine Trennfläche 22 vorgesehen, die eine scharfe Übergangsgrenze zwischen den Bereich 18 und dem Bereich 20 ermöglicht. Selbst bei unpräziser Ausgestaltung des Vorsprungs 20.1 bzw. der Ausnehmung 18.1 der Bereiche 18, 20 wird auf diese Weise eine Möglichkeit gegeben, eine passgenaue Zusammenfügung entsprechend einer definierten Kontur vorzunehmen.

Insbesondere ist es möglich, dass der Vorsprung 20.1 des Bereichs 20 größer als ein geeigneter Vorsprung ist, wobei es ebenfalls möglich ist, dass die Ausnehmung 18.1 des Bereichs 18 kleiner als die geeignete Ausnehmung ist. Die Trennfläche 22 ist bevorzugt aus einem Material gefertigt, dass eine hohe Formungspräzision und gegebenenfalls auch eine große Formstabilität aufweist. Somit kann der gegebenenfalls überdimensionierte Vorsprung 20.1 des Bereichs 20 in den entsprechenden Teil der Trennfläche 22 eingebracht werden und die Trennfläche 22 zusammen mit dem Bereich 20 und dessen Vorsprung 20.1 an den Bereich 18 und dessen Ausnehmung 18.1 angepasst und eingefügt werden.

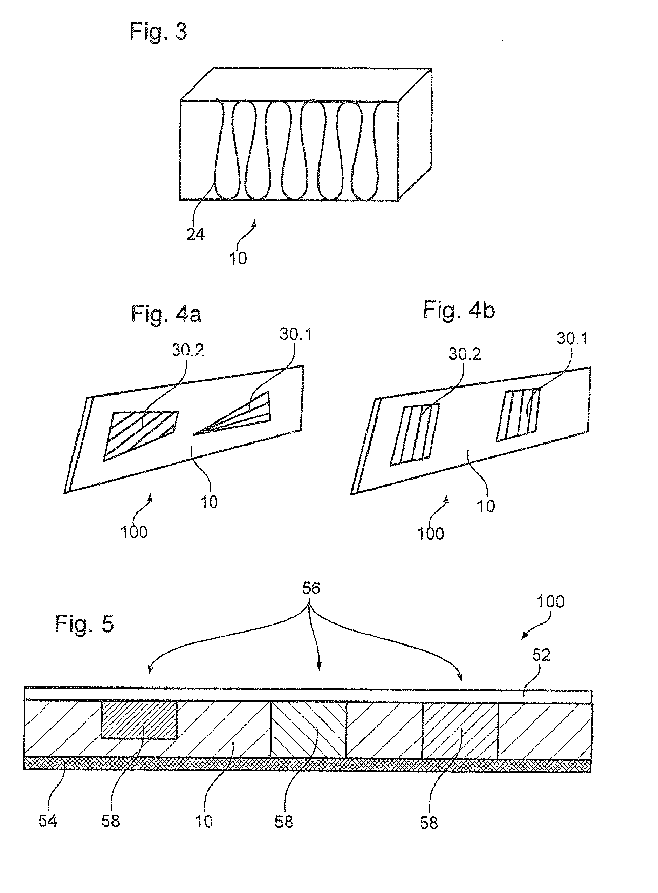

Fig. 3 zeigt eine andere Ausführungsform eines Faserverbundelements 10, gemäß welcher Naturfaserverbundmatten im nicht vorverpressten Zustand miteinander vernäht sind. Eine Dekornaht 24, die insbesondere eine andere Farbe als die Naturfaserverbundmatten hat, wird verwendet, um nach dem Verpressen des Faserverbundelements in Form einer optischen ansprechenden Oberflächenstrukturierung sichtbar zu sein. Eine solche Dekornaht 24 kann auch beim Vernähen von bereits vorverpressten Fasermatten oder dergleichen eingebracht werden. Das Vernähen der Fasermatten kann auch auf Stoß oder überlappend erfolgen. Die Naht kann darüber hinaus auch nur in einer Matte vorgesehen sein und eine reine Zierfunktion erfüllen.

Fig. 4a und 4b zeigen ein Interieurbauteil 100 mit einem Faserverbundelement 10 und Einlagen 30.1, 30.2, die durch ein in das Faserverbundelement 10 vor dem Verpressen eingesetztes Einlagematerial gebildet werden. Die Einlagen 30.1, 30.2 können nahezu beliebig gestaltet sein und einen hochwertigen optischen Eindruck des Interieurbauteils 100 erzeugen. Hierbei ist es natürlich auch denkbar, die Einlagen durch ein erfindungsgemäßes Verpressen herzustellen. Fig. 4a und 4b zeigen exemplarisch zwei mögliche Oberflächengestaltungen der Sichtseite eines Interieurbauteils 100.

Fig. 5 zeigt in einer Schnittdarstellung ein Interieurbauteil 100 mit einem Faserverbundelement 10. In das Faserverbundelement 10 sind Ausnehmungen 56 eingebracht, die als Sackloch oder Durchgangsöffnung ausgeführt sind. An den Grenzflächen des Faserverbundkörpers 10 ist eine Klebebandschicht 52, 54 angebracht. Statt des Klebebands kann hier auch ein Textil, eine Naturfaser in Form eines Bands oder ein flächiges Material aufgebracht sein. Bevorzugt ist das Klebeband transparent, so dass die Oberflächengestaltung des Faserverbundelements 10 durch das Klebeband 52, 54 sichtbar ist. Die Ausnehmungen 56 in den Faserverbundelement 10 sind mit Einlagen 58 gefüllt. Als Einlagematerial dienen beispielsweise Faserverbundmaterialien, wobei auch eine Vielzahl anderer Materialien in die Ausnehmungen 56 eingebracht werden können. Das Klebeband kann auch nur als Hilfsmittel/Fixierhilfe dienen und zu einem späteren Zeitpunkt wieder abgezogen werden. Optional ist die Anbringung einer (nicht dargestellte) Abschlussbeschichtung am Interieurbauteil 100 möglich.

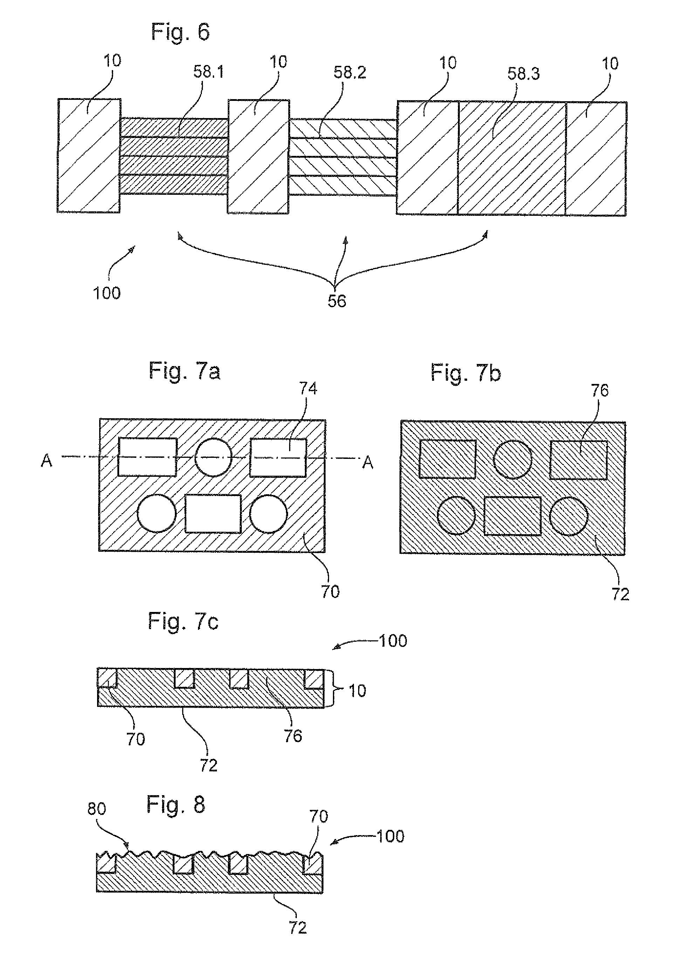

Fig. 6 zeigt eine Schnittdarstellung einer alternativen Ausführungsform eines Interieurbauteils 100 mit dem Faserverbundelement 10 und drei Ausnehmungen 56, wobei jede der Ausnehmungen 56 mit einem Einlagematerial 58.1, 58.2, 58.3 gefüllt ist. Die Einlagematerialien 58.1, 58.2, 58.3 unterscheiden sich voneinander, wie der Fig. 6 zu entnehmen ist. Auf diese Weise wird eine große Vielfalt der Oberflächengestaltung des Interieurbauteils 100 ermöglicht, die auch auf besonders einfache Weise realisiert werden kann.

Auch bei dem Interieurbauteil 100 gemäß Fig. 6 ist es möglich, Schichten aus Klebeband analog zu den Schichten 52, 54 aus Fig. 5 vorzusehen. Diese Schichten 52, 54 können in beiden Ausführungsformen auf der Dekorseite und/oder auf der Rückseite des Interieurbauteils vorgesehen sein. Eine Schicht auf der Dekorseite kann transparent sein, um die optischen Effekte der Oberflächenstrukturierung des Interieurbauteils sichtbar zu lassen. Dagegen kann eine Beschichtung auf der Rückseite des Interieurbauteils auch blickdicht sein, wobei eine solche Schicht beispielsweise zur Stabilität des Interieurbauteils beitragen kann.

Sofern die Einlagen 58, 58.1, 58.2, 58.3 in dem Faserverbundelement 10 des Interieurbauteils 100 ebenfalls ein Faserverbundmaterial umfassen, wird bevorzugt, dass das Faserverbundmaterial der Einlagen eine höhere oder niedrigere Dichte als das Faserverbundmaterial des als Substrat dienenden Faserverbundelementes 10 aufweist. Dies führt zu einer besonders ausgeprägten optischen Eigenart der durch die Einlagen 58, 58.1, 58.2, 58.3 erzeugten Bereiche.

Fig. 7a bis 7c zeigen verschiedene Elemente eines Interieurbauteils 100, während diese zu dem Interieurbauteil 100 zusammengesetzt werden. In Fig. 7a ist eine Matrize 70 eines Faserverbundelements abgebildet. Die Matrize 70 des Faserverbundelements enthält mehrere Ausnehmungen 74, die in Form von Durchgangsöffnungen in die Matrize eingebracht sind.

Fig. 7b zeigt die zu der in Fig. 7a gezeigten Matrize 70 passende Patrize 72, die auf ihrer Oberfläche Vorsprünge 76 aufweist, die in ihrer Anordnung und Dimensionierung den Ausnehmungen 74 in der Matrize 70 aus Fig. 7a entsprechen. Dadurch ist es möglich, dass die Matrize 70 und die Patrize 72 derart miteinander verbunden werden, dass sie zu einem Faserverbundelement 10 werden, das zwei verschieden gestaltete Bereiche aufweist.

Fig. 7c zeigt ein solches Faserverbundelement 10, das sich aus den zusammengesetzten Elementen der Matrize 70 und Patrize 72 ergibt. Das Faserverbundelement 10 ist in dem in Fig. 7c gezeigten Zustand bereits zu dem Interieurbauteil 100 verpresst. Die Schnittdarstellung der Fig. 7c zeigt deutlich die Vorsprünge 76 der Patrize 72 sowie die Ausnehmungen 74 der Matrize 70. Der Schnitt, den Fig. 7c zeigt, ist in Fig. 7a als Strecke A-A angedeutet.

Fig. 8 zeigt das Interieurbauteil 100 aus Fig. 7c, das die Matrize 70 sowie die Patrize 72 aufweist, in derselben Schnittdarstellung. Zwischen dem Zustand des Interieurbauteils gemäß Fig. 7c und dem in Fig. 8 gezeigten Zustand des Interieurbauteils 100 wurde eine zusätzliche Struktur während eines Endverpressschritts auf die Oberfläche 80 des Interieurbauteils 100 aufgebracht. Die durch das Endverpressen strukturierte Oberfläche 80 weist ein Relief auf, das einen zusätzlichen optischen Effekt hervorrufen kann.

Eine Ausführungsform des Interieurbauteils 100, wie es beispielsweise in den Fig. 7a bis 7c und 8 gezeigt ist, ermöglicht besonders gut die Erzeugung eines Mauerwerk-, Fliesen-, Loch- oder Wellendesigns. Insbesondere das Wellendesign lässt sich durch eine Schärfspalt-Behandlung des Faserverbundelements weiter ausführen und verbessern.

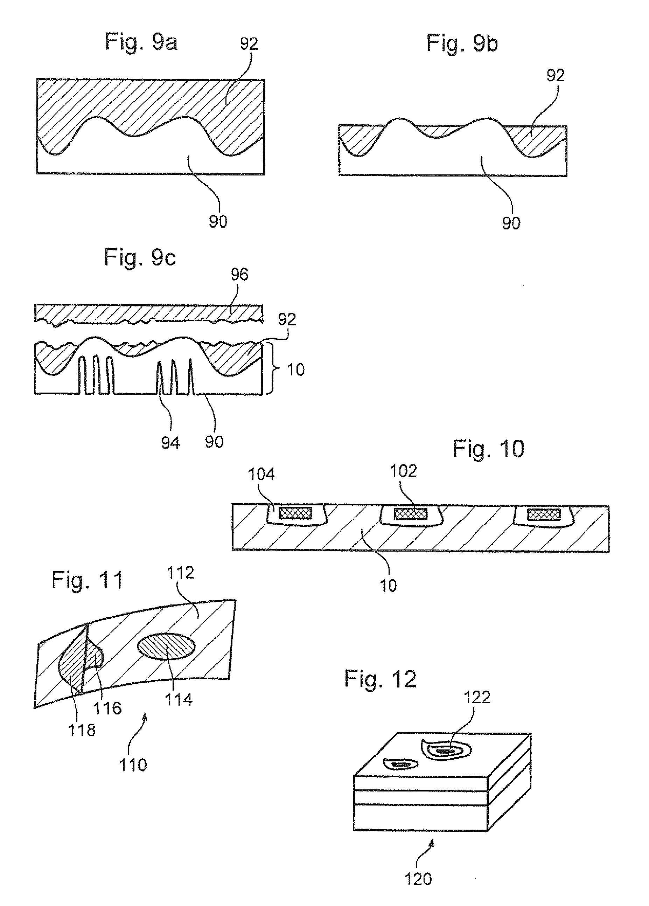

Fig. 9a-9c zeigt in einer Schnittdarstellung eine weitere Möglichkeit der Bearbeitung des Faserverbundelements. Fig. 9a zeigt dabei ein erstes Faserverbundelement 90 und ein zweites Faserverbundelement 92. Die Kontaktfläche zwischen dem ersten Faserverbundelement 90 und dem zweiten Faserverbundelement 92 ist dabei mit einem wellenförmigen Relief versehen. Die zwei Faserverbundelemente 90, 92 sind in dem in Fig. 9a gezeigten Zustand aneinander gefügt und somit miteinander verbunden.

Fig. 9b zeigt das erste Faserverbundelement 90 und das zweite Faserverbundelement 92, wobei zwischen dem Zustand der Fig. 9a und dem Zustand der Fig. 9b ein Schritt des Schärfspaltens stattgefunden hat. Das zweite Faserverbundelement 92 wurde in seiner Dickenrichtung teilweise abgetragen und entsprechend dem Relief der Kontaktfläche zwischen dem ersten Faserverbundelement 90 und dem zweiten Faserverbundelement 92 ausgedünnt bzw. vollständig abgetragen.

Fig. 9c zeigt den Verbund des ersten Faserverbundelements 90 und zweiten Faserverbundelements 92, wobei die Oberfläche des zweiten Faserverbundelements mit einer zusätzlichen Reliefstruktur versehen ist. In das erste Faserverbundelement 90 sind im Bereich der reliefartigen Erhöhungen von hinten Mikroperforationen 94, d. h. kleine Sacklöcher oder Durchgangsbohrungen, eingebracht, die gegebenenfalls beispielsweise durch ein Polymer oder andere Materialien gefüllt werden können. Durch die Mikroperforationen kann der Einfall der Oberfläche gezielt gesteuert werden. Das Faserverbundelement 10 aus dem ersten Faserverbundelement 90 und dem zweiten Faserverbundelement 92 kann zum Endverpressen, wie es in Fig. 9c gezeigt ist, mit einem Werkzeug 96 verpresst werden, das seinerseits starr oder flexibel und mit oder ohne eine strukturierte Oberfläche ausgeführt werden kann.

Fig. 10 zeigt ein Faserverbundelement 10 mit eingebetteten Strukturen 102 und einer Versiegelungsschicht 104, welche die sichtbare Oberfläche des Faserverbundelements 10 und der eingebetteten Strukturen 102 schützt.

In den Fällen, in denen eine Furnierschicht aus einem Fasermaterial auf ein ebenfalls aus einem Fasermaterial oder anders ausgestalteten Träger aufgebracht wird, kann zusätzlich mindestens eine weiche Haptikschicht unterhalb der Furnierschicht vorgesehen sein, die eine sich weich anfühlende Oberfläche des Interieurbauteils ermöglicht. Dies verstärkt einen hochwertigen Eindruck des Interieurbauteils.

Fig. 11 zeigt eine weitere mögliche Ausführungsform eines Interieurbauteils 110. Das Interieurbauteil 110 weist verschiedene Bereiche 112 bis 118 mit unterschiedlichen Strukturen und Oberflächentopographien auf. Wie der Fig. 11 zu entnehmen ist, lassen sich die Bereiche unterschiedlicher Struktur und Oberflächentopographie nahezu beliebig kombinieren, um somit eine große Vielfalt möglicher Oberflächengestaltungen zu erzeugen.

Fig. 12 zeigt eine weitere Ausführungsform eines Interieurbauteils 120. Diese Figur zeigt einen Ausschnitt eines solchen Interieurbauteils 120 mit einer Oberflächenstrukturierung 122, die durch Einlagen in das Faserverbundelement erzeugt wurde. Die Einlagen 122 der Oberflächenstrukturierung erwecken den Eindruck einer künstlichen Maserung des Interieurbauteils und tragen somit zur weiteren Erhöhung der künstlichen Gestaltungsfreiheit eines Interieurbauteils bei.

Zur Erzeugung der erfindungsgemäßen Interieurbauteile können insbesondere Werkzeuge verwendet werden, die bewegliche Elemente enthalten, um durch individuelle Behandlung einzelner Teile oder Bereiche der Oberfläche des Faserverbundelements eine gewünschte Oberflächengestaltung zur erzielen. Dabei ist es insbesondere auch möglich, ein Tauchkantenwerkzeug zu verwenden.

Die vorstehend beschriebenen Ausführungsformen ermöglichen die Herstellung eines Interieurbauteil, das eine Vielzahl definierter künstlicher Oberflächengestaltungen zeigt. Das so erhältliche Interieurbauteil ist leicht herzustellen und vermittelt beim Betrachter einen hochwertigen Eindruck.

## Patentansprüche

1. Interieurbauteil (100, 110, 120) für ein Fahrzeug umfassend:
eine Sichtseite, die im Gebrauch von einem Betrachter optisch wahrnehmbar ist;
ein Faserverbundelement (10) mit einer Oberfläche, die zumindest einen Teil der Sichtseite bildet, wobei das Faserverbundelement (10) zumindest teilweise verpresst ist; und
eine zumindest auf die sichtbare Oberfläche des Faserverbundelements aufgebrachte mehrschichtige Schutzschicht,
**dadurch gekennzeichnet, dass** das Faserverbundelement aus einer Matrix mit verstärkenden Fasern besteht,
wobei die mit der Oberfläche des Faserverbundelements in Kontakt stehende Schicht der Schutzschicht aus einem Material entsprechend dem Matrixmaterial gebildet ist.

2. Interieurbauteil (100, 110, 120) nach Anspruch 1,
wobei die Schutzschicht eine vorzugsweise flüssigkeitsdichte Folie (52) mit mehreren transparenten Schichten ist.

3. Interieurbauteil (100, 110, 120) nach Anspruch 1 oder 2, wobei das Faserverbundelement aus einer Matrix mit Naturfaser-Polypropylen besteht.

4. Interieurbauteil (100, 110, 120) nach Anspruch 3, wobei die mit der Oberfläche des Faserverbundelements in Kontakt stehende Schicht der Schutzschicht aus einem Material auf Polypropylenbasis gebildet ist.

5. Interieurbauteil (100, 110, 120) nach einem der vorstehenden Ansprüche, bei dem wenigstens eine Schicht der Schutzschicht eingefärbt ist.

6. Interieurbauteil (100, 110, 120) nach einem der vorstehenden Ansprüche, bei der die äußerste Schicht der Schutzschicht UV-stabil und kratzfest gestaltet ist.

7. Verfahren zum Herstellen eines Interieurbauteils (100, 110, 120) für ein Fahrzeug nach einem der vorhergehenden Ansprüche, umfassend:
Verpressen eines Faserverbundelements (10), so dass das Faserverbundelement (10) danach zumindest an einer Sichtseite des Interieurbauteils eine definierte künstliche Oberflächengestaltung aufweist, und
Aufbringen einer mehrschichtigen Schutzschicht (52, 104) auf das Faserverbundelement (10).

## Claims

1. Interior component (100, 110, 120) for a vehicle, comprising:
a visible side which during use is visually perceptible to an observer;
a fibre-composite element (10) having a surface which forms at least part of the visible side, wherein the fibre-composite element (10) is at least in part pressed; and
a multi-layered protective layer which is applied at least onto the visible surface of the fibre-composite element;
**characterized in that** the fibre-composite element consists of a matrix with reinforcing fibres,
wherein the layer of the protective layer that is in contact with the surface of the fibre-composite element is formed from a material corresponding to the matrix material.

2. Interior component (100, 110, 120) according to Claim 1, wherein the protective layer is a preferably moisture-tight film (52) having a plurality of transparent layers.

3. Interior component (100, 110, 120) according to Claim 1 or 2, wherein the fibre-composite element is composed of a matrix having natural fibres/polypropylene.

4. Interior component (100, 110, 120) according to Claim 3, wherein the layer of the protective layer that is in contact with the surface of the fibre-composite element is formed from a material based on polypropylene.

5. Interior component (100, 110, 120) according to one of the preceding claims, in which at least one layer of the protective layer is dyed.

6. Interior component (100, 110, 120) according to one of the preceding claims, in which the outermost layer of the protective layer is designed so as to be UV-stable and scratchproof.

7. Method for manufacturing an interior component (100, 110, 120) for a vehicle, according to one of the preceding claims, comprising:
pressing a fibre-composite element (10) such that thereafter the fibre-composite element (10) at least on a visible side of the interior component displays a defined artificial surface design; and
applying a multi-layered protective layer (52, 104) onto the fibre-composite element (10).

## Revendications

1. Elément intérieur (100, 110, 120) pour un véhicule, comprenant:
un côté visible, qui est en cours d'utilisation visuellement perceptible par un observateur;
un élément composite en fibres (10) avec une surface, qui forme au moins une partie du côté visible, l'élément composite en fibres (10) étant au moins partiellement comprimé; et
une couche de protection en plusieurs couches déposée au moins sur la surface visible de l'élément composite en fibres,
**caractérisé en ce que** l'élément composite en fibres se compose d'une matrice avec des fibres de renforcement,
dans lequel la couche de la couche de protection se trouvant en contact avec la surface de l'élément composite en fibres est formée d'un matériau correspondant au matériau de matrice.

2. Elément intérieur (100, 110, 120) selon la revendication 1, dans lequel la couche de protection est un film (52) de préférence étanche au liquide avec plusieurs couches transparentes.

3. Elément intérieur (100, 110, 120) selon la revendication 1 ou 2, dans lequel l'élément composite en fibres se compose d'une matrice avec des fibres naturelles-polypropylène.

4. Elément intérieur (100, 110, 120) selon la revendication 3, dans lequel la couche de la couche de protection se trouvant en contact avec la surface de l'élément composite en fibres est formée en un matériau à base de polypropylène.

5. Elément intérieur (100, 110, 120) selon l'une quelconque des revendications précédentes, dans lequel au moins une couche de la couche de protection est colorée.

6. Elément intérieur (100, 110, 120) selon l'une quelconque des revendications précédentes, dans lequel la couche la plus extérieure de la couche de protection est stable aux UV et résistante aux éraflures.

7. Procédé de production d'un élément intérieur (100, 110, 120) pour un véhicule selon l'une quelconque des revendications précédentes, comprenant les étapes suivantes:
comprimer un élément composite en fibres (10), de telle manière que l'élément composite en fibres (10) présente ensuite une structure superficielle artificielle définie au moins sur un côté visible de l'élément intérieur, et
déposer une couche de protection en plusieurs couches (52, 104) sur l'élément composite en fibres (10).
